(19) Europäisches Patentamt
European Patent Office
Office européen des brevets

(11) **EP 2 625 544 B1**

## (12) FASCICULE DE BREVET EUROPEEN

(45) Date de publication et mention de la délivrance du brevet:
**01.10.2014 Bulletin 2014/40**

(21) Numéro de dépôt: **11764748.7**

(22) Date de dépôt: **06.10.2011**

(51) Int Cl.:
*G01S 17/10* (2006.01)     *G01S 17/89* (2006.01)
*F41G 3/16* (2006.01)       *G01S 17/02* (2006.01)
*F41G 3/06* (2006.01)

(86) Numéro de dépôt international:
**PCT/EP2011/067435**

(87) Numéro de publication internationale:
**WO 2012/045802 (12.04.2012 Gazette 2012/15)**

(54) **DISPOSITIF OPTRONIQUE D'OBSERVATION ET/OU DE VISÉE D'UNE SCÈNE COMPORTANT UN TÉLÉMÈTRE, ET PROCÉDÉ DE TÉLÉMÉTRIE ASSOCIÉ**

OPTOELEKTRONISCHE VORRICHTUNG ZUM BEOBACHTEN UND/ODER ANVISIEREN EINER SZENE MIT EINEM ENTFERNUNGSMESSER UND ENTSPRECHENDES ENTFERNUNGSMESSUNGSVERFAHREN

OPTOELECTRONIC DEVICE FOR OBSERVING AND/OR AIMING AT A SCENE, COMPRISING A RANGEFINDER, AND RELATED RANGE-FINDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2010 FR 1058106**

(43) Date de publication de la demande:
**14.08.2013 Bulletin 2013/33**

(73) Titulaire: **Sagem Défense Sécurité**
**92100 Boulogne-Billancourt (FR)**

(72) Inventeurs:
• **BERTHAULT, Frederic**
**F-75015 Paris (FR)**
• **PATRY, Philippe**
**F-75015 Paris (FR)**
• **AUGEY, Thibault**
**F-75015 Paris (FR)**

(74) Mandataire: **Regimbeau**
**20, rue de Chazelles**
**75847 Paris Cedex 17 (FR)**

(56) Documents cités:
EP-A1- 0 638 824      FR-A1- 2 921 149
US-A- 6 069 656       US-A1- 2006 201 047

# Description

## DOMAINE TECHNIQUE GENERAL

La présente invention concerne un dispositif optronique d'observation et/ou de visée d'une scène comportant une zone d'intérêt appelée cible dans la suite de la présente description, comportant

- un module d'observation comportant

   un capteur d'image et
   un stabilisateur d'une ligne de visée vers la cible ; et

- un télémètre comportant

   un laser impulsionnel multicoup, pour émettre une pluralité d'impulsions laser aller, en direction de la cible à télémétrer, et
   un détecteur d'une pluralité d'impulsions laser retour réfléchies par la scène, pour générer un signal électrique pour chaque impulsion laser retour, pour effectuer une télémétrie de la cible, chaque impulsion laser retour correspondant à une impulsion laser aller.

Elle concerne également un procédé de télémétrie mis en oeuvre sur un tel dispositif.

## ETAT DE L'ART

On connaît des dispositifs de visée et/ou d'observation comportant un télémètre.

Les dispositifs connus comportent de manière classique :

- une voie d'observation qui comprend un capteur d'images,
- une voie de télémétrie laser, dite également voie laser,
- un écran d'affichage commun aux deux voies, sur lequel apparaît l'image issue du capteur d'images et sur lequel sont positionnés un réticule de tir matérialisant l'axe de visée du télémètre laser et un réticule matérialisant le centre du capteur d'image. Ces réticules ont généralement la forme d'une croix, mais peuvent également prendre des formes différentes, comme par exemple un cercle, un carré, etc.

Pour télémétrer une cible, un opérateur du dispositif l'oriente de manière à positionner le réticule laser sur la cible, puis au moins un tir laser est effectué par action sur un bouton poussoir.

Le télémètre envoie au moins une impulsion laser de courte durée (typiquement 20 ns), et déclenche simultanément un chronomètre électronique. Dans le cas des télémètres monocoup n'envoyant qu'une impulsion laser, le chronomètre est arrêté lorsque l'écho laser renvoyé par la cible est détecté par un détecteur de la voie laser.

Le temps de vol de l'impulsion laser pour effectuer un aller-retour à la cible est ainsi connu, et le télémètre en déduit la distance à la cible, la vitesse de la lumière étant une constante connue.

Le faisceau laser du télémètre est émis dans un secteur très étroit (typiquement d'environ 1 mrad, voire moins), ce qui impose un pointage très précis du laser.

Il est donc connu d'équiper un tel dispositif d'un système de stabilisation de l'image, qui permet de compenser les mouvements perturbateurs de l'opérateur qui tient le dispositif avec ses mains.

La situation idéale est de stabiliser l'ensemble des voies optiques, c'est à dire à la fois la voie d'observation de la scène, et la voie de télémétrie laser (comportant la voie d'émission de l'impulsion laser et la voie de détection de l'écho laser après son renvoi par la cible).

La stabilisation permet de maintenir constant l'axe de visée de la voie d'observation, en dépit de petits mouvements du dispositif. Comme pour tous les dispositifs d'observation et/ou de visée portés, les mouvements perturbateurs correspondent en effet à des déplacements du dispositif de faibles amplitudes et de hautes fréquences temporelles (alors que les mouvements volontaires correspondent aux déplacements de grandes amplitudes et de basses fréquences).

Toutefois cette situation idéale de la stabilisation de la voie d'observation et de la voie de télémétrie, employée couramment pour les viseurs embarqués sur des véhicules, est difficile à mettre en oeuvre sur des matériels portés à la main, comme des jumelles d'observation par exemple.

Dans le cas des matériels portés à la main, il est possible de stabiliser la voie d'observation de la scène par traitement d'images. Cette méthode n'est malheureusement pas applicable à la voie de télémétrie. Ainsi par la stabilisation de la voie d'observation, on obtient une image stable sur la voie d'observation, mais l'axe laser dans cette image est mouvant.

Or il est humainement difficile de pointer la cible sans bouger assez longtemps pour effectuer le tir de télémétrie.

Une solution connue selon FR 2 921 149 consiste à retarder le tir de télémétrie en cas de décalage trop important entre l'axe de visée et l'axe laser, et à ne déclencher le tir laser que lorsque le décalage est inférieur à un seuil déterminé. Dans ces conditions le tir laser atteint la cible, et une mesure de distance à la cible peut être effectuée.

La solution connue de FR 2 921 149 présente cependant au moins un inconvénient.

Elle est bien adaptée au cas d'un tir laser impulsionnel monocoup, c'est-à-dire un tir unique sous forme d'une impulsion à forte énergie laser.

Il existe cependant des télémètres impulsionnels multicoups, c'est-à-dire avec un tir laser sous forme d'une pluralité d'impulsions laser. Avec ce type de lasers, la fréquence des impulsions est typiquement de 5 kHz à 10 kHz, et une mesure de distance, obtenue par traitement électrique global de l'ensemble des signaux générés par le détecteur pour chacun des échos correspondant à chacune des impulsions envoyées, est obtenue en général au bout typiquement d'une seconde (la distance à la cible étant considérée comme constante pendant la durée de la télémétrie).

Chaque impulsion laser réfléchie génère en effet un écho laser, qui lui-même génère un signal sur un détecteur du télémètre, échantillonné et mémorisé. Au cours de la séquence de tir laser, tous les signaux sont additionnés. Le signal correspondant à la cible s'additionne arithmétiquement (puisque la cible est à une distance constante pendant la télémétrie, le signal électrique correspondant à l'écho dû à la cible est toujours échantillonné au même moment et avec une amplitude de même signe), tandis que les autres signaux, constitués après réjection de la composante continue par le bruit électrique aléatoire inhérent au détecteur, s'additionnent quadratiquement. Le fonctionnement multicoup augmente donc le rapport signal à bruit (SNR) proportionnellement à √N, N étant le nombre d'impulsions.

Les télémètres impulsionnels multicoups sont en général plus furtifs (c'est-à-dire moins facilement détectables par un capteur optique ennemi par exemple), car

- chaque impulsion laser est de bien plus faible énergie que l'unique impulsion du laser monocoup, et car
- le tir multicoup peut être stoppé dès qu'une mesure de distance à la cible satisfaisante est obtenue, par exemple après quelques centaines d'impulsions (par exemple au bout de 100 ms).

Un télémètre impulsionnel multicoup est divulgué par EP06 388 24.

La solution connue de FR 2 921 149, appliquée cette fois à un télémètre multicoup, peut peut-être garantir que la première impulsion (voire quelques dizaines d'impulsions) sera bien dirigée vers la cible. Mais, même pour une télémétrie ne durant que 100 ms, les directions des impulsions suivantes (surtout dans le cas d'une télémétrie durant environ toute une seconde) ne peut être maîtrisée, car les mouvements perturbateurs de l'opérateur sont en général compris entre quelques Hertz et 10 Hertz.

Or lorsque la taille angulaire de la cible que l'opérateur souhaite télémétrer devient comparable ou plus petite que l'amplitude des mouvements perturbateurs de la ligne de visée, un nombre significatif des impulsions laser peut être réfléchi, non par la cible mais par d'autres objets situés de part et d'autre de celle-ci, et à d'autres distances. De ce fait, le rapport signal à bruit de la mesure, associé au temps de vol à la cible, décroît de façon importante, pouvant aller jusqu'à rendre la mesure de la distance impossible.

En outre, des échos secondaires peuvent faire leur apparition, laissant à l'utilisateur la tâche, souvent difficile, de décider de la distance qui doit être retenue comme étant la bonne parmi plusieurs échos présentés.

Il se peut également que les impulsions laser ne soient pas du tout réfléchies, et perdues pour la télémétrie.

## PRESENTATION DE L'INVENTION

L'invention propose de pallier au moins un de ces inconvénients.

A cet effet, on propose selon l'invention un dispositif optronique d'observation et/ou de visée d'une scène comportant une cible, comportant

- un module d'observation comportant

    un capteur d'image et
    un stabilisateur d'une ligne de visée vers la cible ; et

- un télémètre comportant

    un laser impulsionnel multicoup, pour émettre une pluralité d'impulsions laser aller, en direction de la cible à télémétrer, et
    un détecteur d'une pluralité d'échos laser retour réfléchis par la scène, pour générer un signal électrique pour chaque écho laser retour, pour effectuer une mesure de distance à la cible, chaque écho laser retour correspondant à une impulsion laser aller ;

caractérisé en ce qu'il comporte en outre

- un senseur de mouvement angulaire du dispositif par rapport à la ligne de visée stabilisée, pour déterminer un rayon angulaire de chaque impulsion laser aller, par rapport à la ligne de visée stabilisée ; et
- un sélectionneur pour traiter chaque signal électrique, correspondant à un écho laser retour, en fonction du rayon angulaire de l'impulsion laser aller correspondante.

L'invention est avantageusement complétée par les caractéristiques suivantes, prises seules ou en une quelconque de leur combinaison techniquement possible :

- le sélectionneur est adapté pour ne prendre en compte que les signaux électriques correspondant aux échos Rn laser retour dont les impulsions An laser aller vérifient la condition suivante :

$$\rho n \leq \rho 0 \quad (I1)$$

où pn est le rayon angulaire de la nième impulsion An laser aller ; et

$\rho0$ est un rayon angulaire caractéristique ;

- le sélectionneur est adapté pour

  - effectuer une pluralité d'analyses d'une télémétrie de la cible en ne prenant en compte que les signaux électriques dont l'impulsion An laser aller vérifie la condition (I1), pour une pluralité de $\rho0$ différents, et
  - déterminer un $\rho0_{optimal}$ permettant d'optimiser un ratio signal à bruit de l'écho de la cible dans le signal d'écho global ;
  - le sélectionneur est adapté pour
  - mémoriser au moins une zone d'intérêt autour de la cible C, par défaut ; et/ou
  - accepter un paramétrage manuel d'une zone d'intérêt par un opérateur du dispositif ; et/ou
  - déterminer automatiquement une zone d'intérêt autour de la cible C ;

- le sélectionneur est adapté pour effectuer une cartométrie de la scène dans une zone de cartométrie en effectuant une pluralité d'analyses d'une télémétrie dans la zone de cartométrie ;
- le sélectionneur est adapté pour affecter un coefficient de pondération à chaque signal électrique correspondant à un écho laser retour ;
- le sélectionneur est adapté pour traiter les signaux électriques en temps réel ou lors d'un post-traitement ;
- le senseur de mouvement angulaire comporte :

  - au moins un gyromètre ; et/ou
  - au moins un accéléromètre différentiel ; et/ou
  - au moins un module de traitement d'images issues du capteur (10) d'image ; et

- le dispositif forme jumelle portable ou lunette de tir portable.

L'invention concerne également un procédé de télémétrie mis en oeuvre sur un tel dispositif.
L'invention présente de nombreux avantages.
Elle permet de conserver la furtivité de la télémétrie multicoup.
Elle permet d'améliorer le rapport signal à bruit final, et d'éviter les faux échos.
Elle permet également de générer des données supplémentaires sur les dimensions et la forme de la cible et sur l'entourage immédiat de celle-ci.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement un dispositif possible selon l'invention ;
- les figures 2 représentent schématiquement des impulsions laser aller émises par un dispositif selon l'invention, et des rayons angulaires correspondant ; et
- les figures 3 représentent schématiquement une mise en oeuvre particulière de l'invention, dans laquelle le rayon angulaire caractéristique est déterminé automatiquement par le dispositif.

Sur l'ensemble des figures, les éléments similaires portent des références numériques identiques.

DESCRIPTION DETAILLEE

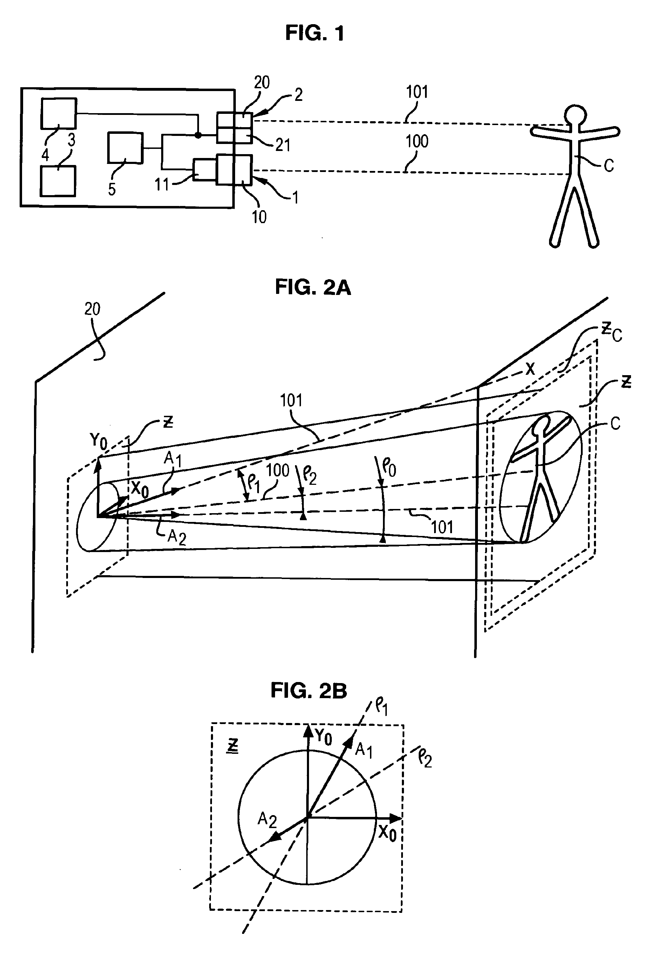

La figure 1 représente schématiquement un mode de réalisation possible d'un dispositif optronique d'observation et/ou de visée d'une scène comportant une cible C.
Le dispositif comporte classiquement un module 1 d'observation et un télémètre 2.
Le module 1 comporte un capteur 10 d'images et un stabilisateur 11 d'une ligne 100 de visée vers la cible C.
La cible C peut être de tout type, comme par exemple un individu ou un véhicule, par exemple un aéronef ou un char d'assaut.
Le télémètre 2 comporte classiquement un laser 20 impulsionnel multicoup, pour émettre une pluralité d'impulsions An laser aller selon une ligne 101 de visée laser, en direction de la cible C à télémétrer, et un détecteur 21 des échos Rn laser retour réfléchis par la scène, et fonction du temps de vol à la cible. Chaque écho Rn laser retour correspond donc à une impulsion An laser aller.
Pour déterminer la direction de la ligne 100 de visée stabilisée, le module d'observation 1 peut par exemple être adapté pour effectuer un moyennage des mouvements perturbateurs d'un opérateur du dispositif, et correspondant au bruit de visée.
La ligne 101 de visée laser n'étant pas stabilisée, elle intègre les mouvements perturbateurs de l'opérateur du dispositif.
Les mouvements perturbateurs peuvent ainsi être estimés de façon différentielle entre la ligne 100 de visée stabilisée et la ligne 101 de visée laser.
La direction de la ligne 100 de visée stabilisée peut également être estimée par application d'un filtre numérique quelconque sur les dernières informations concernant la ligne 100 de visée. Un filtre passe-bas, avec une fréquence de coupure bien choisie (par exemple de quelques Hertz), peut notamment être bien adapté pour permettre à l'utilisateur de télémétrer une cible fixe ou mobile, car l'évolution de la ligne 100 de visée liée à des mouvements perturbateurs involontaires est écartée, alors que le mouvement volontaire réalisé consciemment par l'opérateur pour suivre une cible C en mouvement doit être pris en compte dans l'algorithme de détermination de la direction de la cible.

D'autres procédés sont également possibles pour déterminer la direction de la ligne 100 de visée stabilisée, utilisant par exemple un senseur de mouvement angulaire décrit plus en détail dans la suite de la présente description.

Les impulsions An ont typiquement une durée de 20 ns pour une énergie de 0,5$\mu$J par impulsion et une puissance crête de 25 W, et la fréquence des impulsions est typiquement comprise entre 1 kHz et 10 kHz, par exemple 5 kHz.

Le détecteur 21 est adapté pour générer un signal électrique pour chaque écho Rn laser retour, et pour effectuer une télémétrie de la cible C. A cet effet, le détecteur 21 comporte par exemple une photodiode.

Le dispositif comporte classiquement un écran 5 d'affichage commun aux deux voies, sur lequel apparaît l'image issue du capteur d'images et sur lequel sont positionnés un réticule de tir matérialisant l'axe de visée du télémètre laser et un réticule matérialisant le centre du capteur d'image. Ces réticules ont généralement la forme d'une croix, mais peuvent également prendre des formes différentes, comme par exemple un cercle, un carré, etc.

Le dispositif comporte en outre un senseur 3 de mouvement angulaire du dispositif par rapport à la ligne 100 de visée stabilisée.

Le senseur 3 est adapté pour déterminer un rayon angulaire pn de chaque impulsion An laser aller, par rapport à la ligne 100 de visée stabilisée.

Comme le montrent les figures 2, le rayon angulaire pn est défini comme l'angle entre l'axe de la ligne 100 de visée stabilisée et l'axe de la ligne 101 de visée laser réelle pour l'impulsion An, dans le plan Pn. Les figures 2 représentent ainsi $\rho$1 dans le plan P1 pour l'impulsion A1 et p2 dans le plan P2 pour l'impulsion A2.

Comme le montrent les figures 2, le rayon angulaire pn de chaque impulsion An est généré par les mouvements perturbateurs de l'opérateur, ce qui peut provoquer qu'une impulsion An n'atteigne pas la cible C. Ainsi l'impulsion A1 n'atteint pas la cible C, tandis que l'impulsion A2 l'atteint.

Le senseur 3 comporte ainsi par exemple

- au moins un gyromètre ; et/ou
- au moins un accéléromètre différentiel ; et/ou
- au moins un module de traitement d'images issues du capteur 10 d'image.

On comprend que dans le cas d'un gyromètre ou d'un accéléromètre, ce sont les déplacements physiques du dispositif qui sont analysés, tandis que dans le cas d'un module de traitement d'images, ce sont les décalages entre les images successives du capteur 10 qui sont calculés.

Le dispositif comporte en outre un sélectionneur 4 adapté pour traiter chaque signal électrique, correspondant à un écho Rn laser retour, et généré par le détecteur 21, en fonction du rayon angulaire pn de l'impulsion An laser aller correspondant à l'écho Rn retour.

Le dispositif utilise ainsi le rayon pn de chaque impulsion An pour décider du traitement à effectuer sur le signal électrique issu du détecteur 21 pour l'impulsion Rn correspondante, et notamment de la prise en compte ou non du signal dans la télémétrie.

Ainsi, on pose

- Tn l'instant de départ de la nième l'impulsion An, à partir du télémètre 2 ;
- pn le rayon angulaire de départ de la nième impulsion An à l'instant Tn, qui correspond à l'écart de la nième impulsion An par rapport à la ligne 100 de visée stabilisée ; et
- $\rho$0 un rayon angulaire caractéristique formant un seuil, le seuil correspondant à la cible.

$\rho$0 est fonction notamment de la divergence des impulsions laser, des mouvements perturbateurs, de la portée de la source 20 et du type de cible C. On comprend notamment que si la cible C est de grande dimension et à une faible distance, $\rho$0 sera plus important que pour une cible de faible dimension à très grande distance.

PREMIER MODE DE REALISATION

Selon un premier mode de réalisation, le sélectionneur 4 est adapté pour ne prendre en compte le signal électrique correspondant à l'écho Rn que si la condition suivante est vérifiée :

$$\rho n \leq \rho 0 \quad (11)$$

On considère en effet que les impulsions An vérifiant cette condition atteignent la cible C.

Au contraire, on considère que les impulsions An dont le rayon angulaire vérifie :

$$\rho n > \rho 0$$

n'atteignent pas la cible.

Ne pas prendre en compte le signal électrique correspondant à l'écho Rn dont l'impulsion An n'atteint pas la cible permet

- d'éviter de générer des échos secondaires (par des objets en aval ou en amont du plan de la cible C) et
- d'améliorer le rapport signal à bruit pour un nombre d'impulsions An donné.

On peut en effet montrer que si, sur une totalité M d'impulsions An, m impulsions sont comprises dans le rayon $\rho0$, c'est-à-dire touchent la cible, alors le gain G sur le rapport signal à bruit de la télémétrie, en ne prenant en compte dans la télémétrie que les m échos utiles ayant touché la cible, est de la forme :

$$G \propto \sqrt{\frac{M}{m}}$$

Il est donc avantageux de ne prendre que les échos ayant touché la cible, même si m est petit par rapport à M.

Le sélectionneur 4 peut ainsi être adapté pour mémoriser un rayon angulaire caractéristique $\rho0$ par défaut.

Le sélectionneur 4 peut également, en complément ou en alternative, accepter un paramétrage manuel d'un rayon angulaire caractéristique $\rho0$ par un opérateur du dispositif.

Le sélectionneur 4 peut également, en complément ou en alternative :

- effectuer une pluralité d'analyses d'une même télémétrie de la cible C (une télémétrie correspondant à une série d'impulsions An) en ne prenant en compte que les signaux électriques vérifiant la condition (I1), pour une pluralité de $\rho0$ différents (chaque analyse de la même télémétrie étant effectuée avec un $\rho0$ donné), typiquement croissants, et
- déterminer un $\rho0_{optimal}$ permettant d'optimiser un ratio signal à bruit dû à la scène.

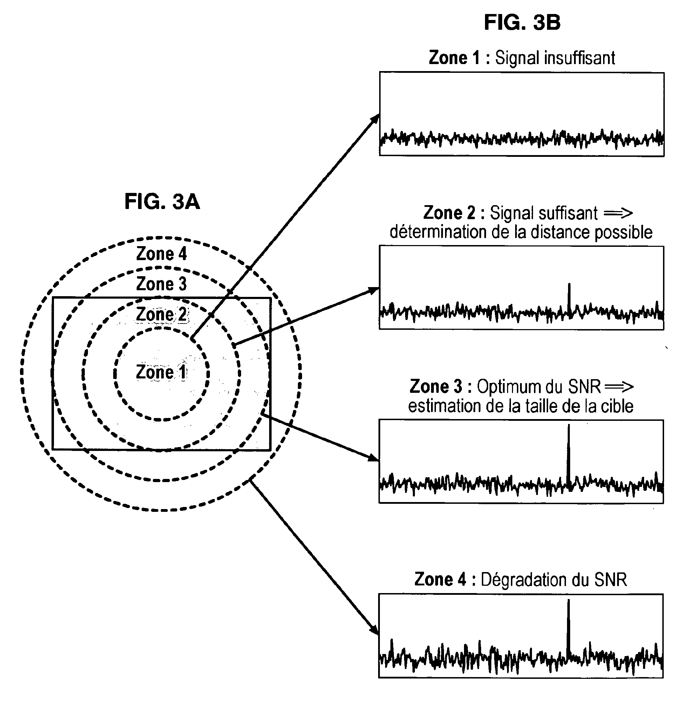

En effet, comme le montrent les figures 3, avec un $\rho0$ correspondant à une zone 1, le signal correspondant aux Rn ne se dégage pas suffisamment du bruit pour pouvoir effectuer une télémétrie. En effet, peu de Rn sont pris en compte, et on rappelle que dans une télémétrie multicoup les impulsions laser sont de faible énergie. Le calcul de télémétrie n'aboutit pas pour cette valeur de $\rho0$.

Pour un $\rho0$ correspondant à une zone 2, le signal correspondant aux Rn se dégage suffisamment du bruit pour pouvoir effectuer une télémétrie. Le premier pic de signal sortant du bruit est considéré comme étant le signal correspondant aux échos dus à la cible, au centre de la ligne 100 de visée. Une télémétrie est possible.

Cependant, si l'on augmente encore $\rho0$ pour aboutir à une zone 3, on obtient un maximum du rapport signal à bruit, car la télémétrie prend en compte un nombre important de Rn.

Si $\rho0$ est encore augmenté, alors le rapport signal à bruit se dégrade et/ou fait apparaître des échos secondaires, car la télémétrie prend en compte des Rn n'ayant pas subi de réflexion et/ou ayant subi des réflexions issues d'objets entourant la cible (et non pas issues de la cible.

On pose donc $\rho0_{optmal}$ le $\rho0$ correspondant à la zone 3. $\rho0_{optimal}$ donne ainsi une estimation de la dimension et de la forme (en angle et en mètre) des différents objets situés dans la zone de télémétrie.

## DEUXIEME MODE DE REALISATION

Selon un deuxième mode de réalisation, le sélectionneur 4 est adapté pour que l'opérateur puisse définir au moins une zone Z d'intérêt autour de la cible C. La zone Z peut également être définie par défaut.

La zone Z peut par exemple être définie par au moins un des paramètres suivants.

- des coordonnées caractéristiques (X0, Y0) qui représentent les dimensions de la zone Z selon un axe horizontal X et un axe vertical Z dans le plan du laser 20 ;
- une zone choisie de l'espace.

Le sélectionneur 4 peut également déterminer automatiquement au moins une zone d'intérêt.

A cet effet, le sélectionneur 4 effectue un post-traitement des signaux issus du détecteur 21.

Pour cela, à chaque signal correspondant à un écho Rn, le sélectionneur 4 associe des coordonnées d'écart de l'impulsion An par rapport à la ligne de visée 100. Le sélectionneur 4 peut ainsi traiter l'ensemble des signaux pour identifier au moins une zone de l'espace permettant une optimisation du rapport signal sur bruit correspondant à une distance à la cible C.

Le sélectionneur 4 peut bien entendu mémoriser ou accepter plusieurs zones Z d'intérêt.

Dans le premier mode de réalisation et dans le deuxième mode de réalisation, le sélectionneur 4 est donc adapté pour effectuer une cartométrie de la scène dans une zone Zc de cartométrie correspondant :

- soit à Un $\rho0_{optimal}$
- soit à une zone Z d'intérêt optimisant le rapport signal sur bruit,

en effectuant une pluralité d'analyses d'une même télémétrie dans la zone Zc de cartométrie. Ainsi, il peut être possible d'extraire des analyses plusieurs distances, tailles et formes de plusieurs objets situés dans le voisinage de la cible visée.

## TROISIEME MODE DE REALISATION

Selon un troisième mode de réalisation, le sélectionneur 4 est adapté pour affecter un coefficient de pondération à chaque signal électrique correspondant à un nième écho Rn laser retour. Cette fonction de pondération peut par exemple être une fonction gaussienne de $\rho n$ (c'est à dire l'écart angulaire entre la ligne de visée stabilisée 100 et la ligne de visée laser 101 au moment de l'envoi de l'impulsion aller An).

Dans tous les modes de réalisation décrits ci-dessus, le sélectionneur 4 est adapté pour traiter les signaux électriques soit en temps réel, soit lors d'un post-traitement.

Le dispositif décrit ci-dessus forme avantageusement une jumelle portable ou une lunette de tir portable.

## Revendications

1. Dispositif optronique d'observation et/ou de visée d'une scène comportant une cible (C), comportant

   - un module (1) d'observation comportant

      un capteur (10) d'image et
      un stabilisateur (11) d'une ligne (100) de visée vers la cible (C) ; et

   - un télémètre (2) comportant

      un laser (20) impulsionnel multicoup, pour émettre une pluralité d'impulsions (An) laser aller, en direction de la cible (C) à télémétrer, et
      un détecteur (21) d'une pluralité d'échos (Rn) laser retour réfléchis par la scène, pour générer un signal électrique pour chaque écho (Rn) laser retour, pour effectuer une mesure de distance à la cible (C), chaque écho (Rn) laser retour correspondant à une impulsion (An) laser aller ; **caractérisé en ce qu'**il comporte en outre

   - un senseur (3) de mouvement angulaire du dispositif par rapport à la ligne (100) de visée stabilisée, pour déterminer un rayon angulaire (pn) de chaque impulsion (An) laser aller, par rapport à la ligne (100) de visée stabilisée ; et
   - un sélectionneur (4) pour traiter chaque signal électrique, correspondant à un écho (Rn) laser retour, en fonction du rayon angulaire (pn) de l'impulsion (An) laser aller correspondante.

2. Dispositif selon la revendication 1, dans lequel le sélectionneur (4) est adapté pour ne prendre en compte que les signaux électriques correspondant aux échos Rn laser retour dont les impulsions An laser aller vérifient la condition suivante :

$$\rho n \leq \rho 0 \quad (l1)$$

   où pn est le rayon angulaire de la nième impulsion An laser aller ; et

ρ0 est un rayon angulaire caractéristique.

3. Dispositif selon la revendication 2, dans lequel le sélectionneur (4) est adapté pour

   - effectuer une pluralité d'analyses d'une télémétrie de la cible (C) en ne prenant en compte que les signaux électriques dont l'impulsion An laser aller vérifie la condition (I1), pour une pluralité de ρ0 différents, et
   - déterminer un $\rho 0_{optimal}$ permettant d'optimiser un ratio signal à bruit de l'écho de la cible dans le signal d'écho global.

4. Dispositif selon la revendication 2, dans lequel le sélectionneur (4) est adapté pour

   - mémoriser au moins une zone d'intérêt (Z) autour de la cible (C), par défaut ; et/ou
   - accepter un paramétrage manuel d'une zone d'intérêt (Z) par un opérateur du dispositif ; et/ou
   - déterminer automatiquement une zone (Z) d'intérêt autour de la cible (C).

5. Dispositif selon l'une des revendications 3 ou 4, dans lequel le sélectionneur (4) est adapté pour effectuer une cartométrie de la scène dans une zone (Zc) de cartométrie en effectuant une pluralité d'analyses d'une télémétrie dans la zone (Zc) de cartométrie.

6. Dispositif selon la revendication 1, dans lequel le sélectionneur (4) est adapté pour affecter un coefficient de pondération à chaque signal électrique correspondant à un écho (Rn) laser retour.

7. Dispositif selon l'une des revendications 1 à 6, dans lequel le sélectionneur (4) est adapté pour traiter les signaux électriques en temps réel ou lors d'un post-traitement.

8. Dispositif selon l'une des revendications 1 à 7, dans lequel le senseur (3) de mouvement angulaire comporte :

   - au moins un gyromètre ; et/ou
   - au moins un accéléromètre différentiel ; et/ou
   - au moins un module de traitement d'images issues du capteur (10) d'image.

9. Dispositif selon l'une des revendications 1 à 8, formant jumelle portable ou lunette de tir portable.

10. Procédé de télémétrie d'une cible (C) présente dans une scène, **caractérisé en ce qu'**il est mis en oeuvre sur un dispositif selon l'une des revendications 1 à 9.

**Patentansprüche**

1. Optoelektronische Vorrichtung zum Beobachten und/oder Anvisieren einer Szene mit einem Ziel (C), enthaltend:

   - ein Beobachtungsmodul (1), das

     einen Bildsensor (10) und
     einen Stabilisator (11) für eine Sichtlinie (100) zu dem Ziel (C) aufweist; und

   - einen Entfernungsmesser (2), der

     einen Mehrfachimpulslaser (20) aufweist, um eine Mehrzahl von Vorlauf-Laserimpulsen (An) in Richtung des zu vermessenden Ziels (C) auszugeben, sowie
     einen Sensor (21) für eine Mehrzahl von Rücklauf-Laserechos (Rn), die von der Szene reflektiert werden, um ein elektrisches Signal für jedes Rücklauf-Laserecho (Rn) zu erzeugen, um eine Messung der Entfernung von dem Ziel (C) durchzuführen, wobei jedes Rücklauf-Laserecho (Rn) einem Vorlauf-Laserimpuls (An) entspricht;

   **dadurch gekennzeichnet, dass** sie ferner enthält:

   - einen Sensor (3) zum Erfassen der Winkelbewegung der Vorrichtung bezüglich der stabilisieren Sichtlinie (100), um einen Winkelradius (pn) eines jeden Vorlauf-Laserimpulses (An) bezüglich der stabilisierten Sichtlinie (100) zu ermitteln; und
   - einen Wähler (4), um jedes elektrisches Signal, das einem Rücklauf-Laserecho (Rn) entspricht, in Abhängigkeit von dem Winkelradius (pn) des entsprechenden Vorlauf-Laserimpulses (An) zu verarbeiten.

2. Vorrichtung nach Anspruch 1, wobei der Wähler (4) dazu ausgelegt ist, nur die elektrischen Signale zu berücksichtigen, die den Rücklauf-Laserechos Rn entsprechen, deren Vorlauf-Laserimpulse An die nachfolgende Bedingung erfüllen:

$$\rho n \leq \rho 0 \quad (11)$$

   worin pn der Winkelradius des n-ten Vorlauf-Laserimpulses An und $\rho 0$ ein kennzeichnender Winkelradius ist.

3. Vorrichtung nach Anspruch 2, wobei der Wähler (4) dazu ausgelegt ist,

   - eine Mehrzahl von Analysen einer Entfernungsmessung des Ziels (C) durchzuführen, wobei nur die elektrischen Signale berücksichtigt werden, deren Vorlauf-Laserimpuls An die Bedingung (11) bei einer Mehrzahl von unterschiedlichen $\rho 0$ erfüllt, und
   - einen $\rho 0_{optimal}$ zu ermitteln, mit dem ein Signal-RauschVerhältnis des Echos des Ziels in dem Gesamtechosignal optimiert werden kann.

4. Vorrichtung nach Anspruch 2, wobei der Wähler (4) dazu ausgelegt ist, um

   - standardmäßig zumindest einen interessierenden Bereich (Z) um das Ziel (C) herum abzuspeichern; und/oder
   - eine manuelle Parametrierung eines interessierenden Bereichs (Z) durch einen Bediener der Vorrichtung anzunehmen; und/oder
   - automatisch einen interessierenden Bereich (Z) um das Ziel (C) herum zu bestimmen.

5. Vorrichtung nach einem der Ansprüche 3 oder 4, wobei der Wähler (4) dazu ausgelegt ist, eine Kartometrie der Szene in einem Kartometrie-Bereich (Zc) durchzuführen, indem eine Mehrzahl von Analysen einer Entfernungsmessung in dem Kartometrie-Bereich (Zc) durchgeführt wird.

6. Vorrichtung nach Anspruch 1, wobei der Wähler (4) dazu ausgelegt ist, jedem elektrischen Signal, das einem Rücklauf-Laserecho (Rn) entspricht, einen Gewichtungskoeffizienten zuzuordnen.

7. Vorrichtung nach einem der Ansprüche 1 bis 6, wobei der Wähler (4) dazu ausgelegt ist, die elektrischen Signale in Echtzeit oder bei einer Nachbearbeitung zu verarbeiten.

8. Vorrichtung nach einem der Ansprüche 1 bis 7, wobei der Winkelbewegungs-Sensor (3) aufweist:

   - zumindest ein Gyrometer; und/oder
   - zumindest einen Differential-Beschleunigungsmesser; und/oder
   - zumindest ein Modul zum Verarbeiten von Bildern, die von dem Bildsensor (10) stammen.

9. Vorrichtung nach einem der Ansprüche 1 bis 8 als tragbares Fernglas oder tragbares Zielfernrohr.

10. Verfahren zur Entfernungsmessung eines Ziels (C), das in einer Szene vorliegt, **dadurch gekennzeichnet, dass** es bei einer Vorrichtung nach einem der Ansprüche 1 bis 9 durchgeführt wird.

## Claims

**1.** Opto-electronic device for observing and/or aiming at a scene comprising a target (C), comprising

- an observation module (1) comprising

an image sensor (10) and
a stabiliser (11) for a line of sight (100) towards the target (C); and

- a telemeter (2) comprising

a multi-shot pulsed laser (20) for emitting a plurality of outward laser pulses (An) in the direction of the target (C) to be telemetered, and
a detector (21) for a plurality of return laser echoes (Rn) reflected by the scene in order to generate an electrical signal for each return laser echo (Rn) in order to make a measurement of distance to the target (C), each return laser echo (Rn) corresponding to an outward laser pulse (An);

**characterised in that** it also comprises

- a sensor (3) of angular movement of the device with respect to the stabilised line of sight (100) in order to determine an angular radius (pn) of each outward laser pulse (An) with respect to the stabilised line of sight (100); and
- a selector (4) for processing each electrical signal, corresponding to a return laser echo (Rn), according to the angular radius (pn) of the corresponding outward laser pulse (An).

**2.** Device according to claim 1, wherein the selector (4) is suitable for taking into account only the electrical signals corresponding to the return laser echoes Rn the outward laser pulses An of which satisfy the following condition:

$$\rho n \leq \rho 0 \quad (I1)$$

where pn is the angular radius of the $n^{th}$ outward laser pulse An; and
$\rho 0$ is a characteristic angular radius.

**3.** Device according to claim 2, wherein the selector (4) is suitable for

- making a plurality of analyses of a telemetry of the target (C), taking into account only the electrical signals where the outward laser pulse An satisfies the condition (I1), for a plurality of different $\rho 0$s, and
- determining a $\rho 0_{optimum}$ for optimising a signal to noise ratio of the echo of the target in the global echo signal.

**4.** Device according to claim 2, wherein the selector (4) is suitable for

- storing at least one zone of interest (Z) around the target (C), by default; and/or
- accepting a manual configuration of a zone (Z) of interest by an operator of the device; and/or
- automatically determining a zone (Z) of interest around the target (C).

**5.** Device according to any of claims 3 or 4, wherein the selector (4) is suitable for mapping of the scene in a mapping zone (Zc) by making a plurality of analyses of a telemetry in the mapping zone (Zc).

**6.** Device according to claim 1, wherein the selector (4) is suitable for allocating a weighting coefficient to each electrical signal corresponding to a return laser echo (Rn).

**7.** Device according to any of claims 1 to 6, wherein the selector (4) is suitable for processing the electrical signals in real time or during post-processing.

**8.** Device according to any of claims 1 to 7, wherein the angular movement sensor (3) comprises:

- at least one gyrometer; and/or
- at least one differential accelerometer; and/or
- at least one module for processing images issuing from the image sensor (10).

**9.** Device according to any of claims 1 to 8, forming portable binoculars or a portable telescopic sight.

**10.** Method for the telemetry of a target (C) present in a scene, **characterised in that** it is implemented on a device according to any of claims 1 to 9.

## FIG. 1

## FIG. 2A

## FIG. 2B

# FIG. 3B

**Zone 1 :** Signal insuffisant

**FIG. 3A**

Zone 4
Zone 3
Zone 2
Zone 1

**Zone 2 :** Signal suffisant ⟹
détermination de la distance possible

**Zone 3 :** Optimum du SNR ⟹
estimation de la taille de la cible

**Zone 4 :** Dégradation du SNR

**EP 2 625 544 B1**

## RÉFÉRENCES CITÉES DANS LA DESCRIPTION

### Documents brevets cités dans la description

- FR 2921149
- EP 0638824 A